Europäisches Patentamt

European Patent Office

Office européen des brevets

(19)

(11) **EP 1 403 962 B1**

(12) **FASCICULE DE BREVET EUROPEEN**

(45) Date de publication et mention
de la délivrance du brevet:
**14.12.2005 Bulletin 2005/50**

(51) Int Cl.⁷: **H01Q 3/26**, H04B 7/04,
H04B 17/00

(21) Numéro de dépôt: **03103537.1**

(22) Date de dépôt: **24.09.2003**

(54) **Procédé et dispositif de tarage-égalisation d'un système de réception.**

Verfahren und Vorrichtung zur Kalibrierung-Entzerrung eines Empfangssystems

Method and apparatus for calibration-equalization of a reception system

(84) Etats contractants désignés:
**AT BE BG CH CY CZ DE DK EE ES FI FR GB GR
HU IE IT LI LU MC NL PT RO SE SI SK TR**

(30) Priorité: **27.09.2002 FR 0212010**

(43) Date de publication de la demande:
**31.03.2004 Bulletin 2004/14**

(73) Titulaire: **Thales**
**92526 Neuilly Sur Seine (FR)**

(72) Inventeurs:
• **CHEVALIER, Pascal**
**THALES INTELECTUAL PROPERTY**
**94117 - ARCUEIL (FR)**

• **DONNET, Christophe**
**THALES INTELECTUAL PROPERTY**
**94117 - ARCUEIL (FR)**

(74) Mandataire: **Dudouit, Isabelle**
**Marks & Clerk France**
**31-33 Avenue Aristide Briand**
**94117 Arcueil Cedex (FR)**

(56) Documents cités:
**EP-A- 1 014 485**          **US-A1- 2002 057 660**
**US-B1- 6 205 341**

## Description

La présente invention concerne un procédé et un dispositif de tarage et d'égalisation des chaînes de réception d'un système de traitement d'antennes embarqué sur satellite, par exemple.

Elle peut être utilisée dans un système de traitement d'antenne embarqué sur un satellite géostationnaire, pour le tarage et l'égalisation des chaînes de réception. Elle est aussi employée pour vérifier le bon fonctionnement de ces opérations, tarage et égalisation, ces dernières pouvant servir par la suite au diagnostic de pannes des voies de réception. Il est aussi possible de mettre en oeuvre l'ensemble du système, à partir du sol, à des fins de localisation et de réjection des perturbateurs.

L'invention trouve son application, par exemple, dans le domaine des télécommunications spatiales.

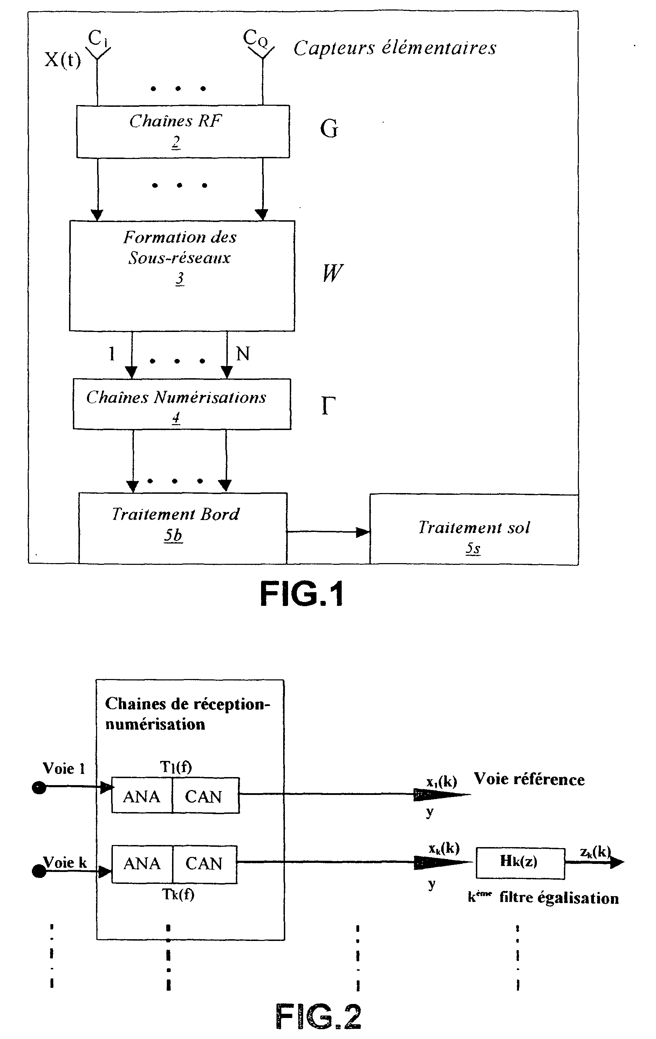

La figure 1 représente un exemple de système de goniométrie ou d'antibrouillage embarqué sur satellite. Il est composé d'un réseau de Q capteurs élémentaires $C_1$, ....$C_Q$, d'un ensemble de chaînes actives RF 2 placées en aval des capteurs, éventuellement d'un dispositif 3 de formation de sous-réseaux ayant pour fonction de diminuer le nombre de voies à numériser, d'un ensemble 4 de chaînes de réception intégrant par exemple la numérisation des signaux et d'un dispositif 5 de traitement des données numérisées, réparti entre le bord 5b et le sol 5s.

Les algorithmes de traitement utilisés sont généralement basés sur l'exploitation de la cohérence spatiale d'une source entre les différents capteurs du réseau. Cette cohérence spatiale est aussi à la base de techniques de réjection des brouilleurs par filtrage spatial des observations. Cette cohérence spatiale doit être conservée en sortie des chaînes de réception et de numérisation pour assurer le bon fonctionnement du système.

Dans tout système opérationnel, les chaînes de réception situées en aval des différents capteurs sont rarement identiques. La conservation de la cohérence spatiale d'une source requiert en sortie des chaînes la pré-compensation des réponses différentielles en phase, en amplitude et en temps de groupe des chaînes de réception, ceci sur toute la bande de réception. La figure 2 résume les étapes permettant d'obtenir cette pré-compensation. Elle s'effectue par filtrage (filtre $H_k(z)$ des sorties des chaînes de réception et l'opération associée est appelée égalisation des chaînes.

L'opération d'égalisation est renouvelée aussi souvent que les dérives introduites au niveau des chaînes de réception par les paramètres d'influence dépassent un seuil critique. Il devient ensuite nécessaire de mettre à jour les compensations, c'est-à-dire les filtres d'égalisation $H_k(z)$. Les paramètres d'influence identifiés sont par exemple la température, le vieillissement des composants, les radiations, le réglage de gain des chaînes de réception.

Différentes méthodes décrites pour l'égalisation des chaînes de réception nécessitent, explicitement ou implicitement, l'apprentissage des fonctions de transfert $T_k(f)$ différentielles entre chaînes. Cette opération d'apprentissage s'appelle le tarage duquel l'égalisation est déduite.

L'art antérieur décrit différentes techniques de tarage-égalisation qui peuvent être regroupées en deux familles se différenciant notamment par leur capacité à s'accommoder ou non de la présence des observations capteurs pendant les phases de tarage et d'égalisation. Pour les techniques s'accommodant de la présence des observations, un signal de tarage de faible puissance est ajouté à celles-ci. En revanche, dans le cas contraire, le signal de tarage est injecté à la place des observations.

Pour la famille qui ne s'accommode pas de la présence des signaux observés, on distingue encore deux sous-familles de traitements. Les traitements de la première mettent en oeuvre le tarage et l'égalisation de manière découplée alors que les traitements de la seconde couplent le tarage et l'égalisation.

La seconde approche utilise le tarage et l'égalisation de manière couplée, en cherchant à obtenir que les sorties des chaînes égalisées ressemblent le plus possible aux sorties d'une chaîne dite de référence, au sens d'un critère de Minimisation d'une Erreur Quadratique Moyenne par exemple.

L'approche découplée met en oeuvre le tarage et l'égalisation de manière totalement découplée. Dans ces conditions, le tarage, dont le but est d'estimer les réponses différentielles des chaînes de réception, s'effectue à partir de l'injection en entrée de ces chaînes d'un signal de tarage pouvant correspondre à une sinusoïde dont la fréquence varie séquentiellement sur l'ensemble de la bande de réception. Les mesures effectuées en sortie des chaînes permettent d'estimer des erreurs différentielles entre chaînes et de construire dans un second temps des filtres égaliseurs.

Avant d'introduire l'objet de la présente invention, quelques rappels concernant les procédures d'égalisation selon l'art antérieur sont données.

## A. Signaux en sortie des capteurs

Le réseau à *N* capteurs (correspondant à des éléments rayonnants ou à des sous-réseaux préformés) d'un système de traitement d'antenne est supposé recevoir un mélange bruité de $P$ ($P \leq N$) sources à bande étroite (BE). Sous ces hypothèses, le vecteur, *v*(*t*), des enveloppes complexes des signaux en sortie des capteurs s'écrit, à un instant *t*

$$v(t) \;=\; \sum_{p=1}^{P} \; m_p(t)\, a_p \;+\; b(t) \quad \underset{=}{\triangle} \; A\, m(t) \;+\; b(t) \tag{1}$$

où $b(t)$ est le vecteur bruit, $m_p(t)$ et $a_p$ correspondent respectivement à l'enveloppe complexe et au vecteur directeur de la source $p$, $m(t)$ est le vecteur dont les composantes sont les $m_p(t)$ et $A$ est la matrice ($N$ x $P$) dont les colonnes sont les vecteurs $ap$.

Pour des capteurs quelconques, la composante $n$ du vecteur directeur $a_p$ est donnée par

$$a_{pn} = f_n(k_p, \eta_p)\exp(-jk_p r_n) \tag{2}$$

où $k_p$ et $\eta_p$ sont respectivement le vecteur d'onde et les paramètres de polarisation de la source $p$, $r_n$ est le vecteur position du capteur $n$ et $f_n(k_p, \eta_p)$ est la réponse complexe du capteur $n$ dans la direction du vecteur d'onde $k_p$ pour la polarisation $\eta_p$.

Les techniques de goniométrie et certaines techniques de filtrage d'antenne ou d'antibrouillage exploitent implicitement ou explicitement les modèles donnés par les relations (1) et (2). Toutefois, le modèle (1) n'est pas directement observable et seul le modèle (décrit dans le paragraphe B suivant) de signaux en sortie des chaînes de numérisation est observable.

**B. Signaux en sortie des chaînes de numérisation**

Les signaux en sortie des capteurs transitent à travers les chaînes de réception-numérisation (de réponses en fréquences $T_n(f)$) avant d'être observés. Dans un système réel, ces chaînes, dont on souhaite qu'elles soient les plus ressemblantes possibles, restent en général sensiblement différentes et, qui plus est, fluctuent par exemple à cause de la température ou du vieillissement.

Si on note $T_n(t)$ la réponse impulsionnelle de la chaîne de numérisation $n$, la composante $n$ du vecteur observation, $x(t)$, en sortie des chaînes de numérisation s'écrit

$$x_n(t) \;=\; \sum_{p=1}^{P} \; T_n(t) \ast m_p(t)\, a_{pn} \;+\; T_n(t) \ast b_n(t) \tag{3}$$

où $b_n(t)$ est la composante $n$ du vecteur $b(t)$. De l'expression (3) on déduit celle du vecteur, $x(t)$, donnée par

$$x(t) \;=\; \sum_{p=1}^{P} \; T(t) \ast a_p\, m_p(t) \;+\; T(t) \ast b(t) \;\underset{=}{\triangle}\; T(t) \ast A\, m(t) \;+\; T(t) \ast b(t) \tag{4}$$

où $T(t)$ est une matrice diagonale ($N$ x $N$) dont les termes diagonaux sont les quantités $T_n(t)$. Dans le domaine fréquentiel, le modèle (4) s'écrit

$$x(f) \;=\; \sum_{p=1}^{P} \; m_p(f)\, T(f)\, a_p \;+\; T(f)\, b(f) \;\underset{=}{\triangle}\; T(f)\, A\, m(f) \;+\; T(f)\, b(f) \tag{5}$$

où $m_p(f)$, $x(f)$, $T(f)$ et $m(f)$ sont les transformées de Fourier respectivement de $m_p(t)$, $x(t)$, $T(t)$ et $m(t)$.

Ainsi, en sortie de chaînes de numérisation, le vecteur directeur apparent de la source $p$ à la fréquence $f$ n'est plus $a_p$ mais $T(f)\, a_p$, vecteur qui ne devient proportionnel à $a_p$ que si la matrice $T(f)$ est proportionnelle à l'identité, c'est-à-dire si les réponses impulsionnelles $T_n(t)$ sont identiques pour tout $n$. En pratique, les chaînes sont différentes et les vecteurs $T(f)$ $\boldsymbol{a}_p$ et $\boldsymbol{a}_p$ ne sont pas colinéaires, ce qui constitue une source de dégradation des performances des techniques exploitant explicitement les relations (1) et (2) comme les techniques de goniométrie.

**C - Egalisation des chaînes de réception**

Afin de pallier les limitations décrites précédemment, une des méthodes, connue de l'art antérieur, consiste à transformer, par filtrage linéaire invariant $H(t)$, où $H(t)$ est la matrice diagonale des réponses impulsionnelles $h_n(t)$, les observations $\boldsymbol{x}(t)$ en observations $\boldsymbol{z}(t)$ données par

$$z(t) = H(t) * x(t) = H(t) * T(t) * A\, m(t) + H(t) * T(t)\, b(t) \qquad (6)$$

de transformée de Fourier

$$z(f) = H(f)\, x(f) = H(f)\, T(f)\, A\, m(f) + H(f)\, T(f)\, b(f) \qquad (7)$$

telles que $H(f)\, T(f)$ devienne une matrice proportionnelle à l'identité.
La recherche de $H(f)$ vérifiant cette propriété correspond à l'opération d'égalisation des chaînes de réception. En pratique, le procédé cherchera $H(f)$ telle que $H(f)\, T(f) = T_1(f)\, I$. Ceci consiste à choisir la chaîne 1 comme chaîne de référence et à faire en sorte que les autres chaînes ressemblent le plus possible à la chaîne 1 après égalisation. Ainsi la matrice $H(f)$ cherchée est donnée par :

$$H(f) = T_1(f)\, T(f)^{-1} \qquad (8)$$

ce qui signifie que la réponse en fréquence, $h_n(f)$, du filtre égaliseur de la voie $n$ s'écrit

$$h_n(f) = T_1(f)\, /\, T_n(f) \qquad (9)$$

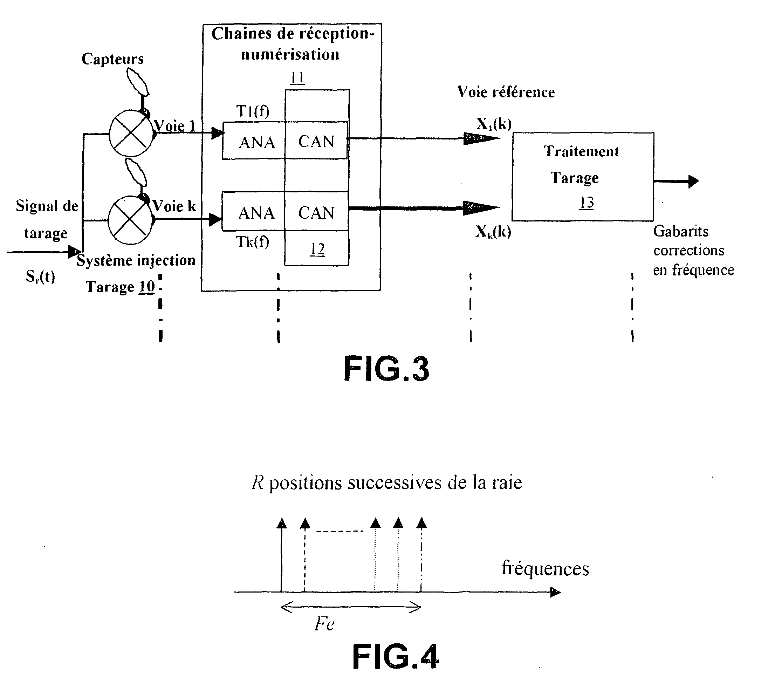

La figure 3 représente un système de tarage générique classiquement utilisé qui est composé :

- d'un signal de tarage $S_T(t)$ correspondant à une sinusoïde dont la fréquence est balayée sur toute la bande numérisée $F_e$ par pas de $\Delta f$ (figure 4).
- d'un système d'injection 10 du signal de tarage dans les chaînes de réception-numérisation 11. Classiquement, on utilise un système à base de commutateurs (ou switchs). Rappelons qu'une chaîne de réception-numérisation est composée d'un certain nombre d'éléments analogiques, référencés par le bloc ANA sur la figure tels qu'une chaîne de transposition de fréquences (à base de synthétiseur et d'oscillateurs Locaux), d'un ou plusieurs amplificateurs de puissance, de filtres passe bande, d'un filtre anti-repliement, ainsi qu'un convertisseur Analogique-Numérique (CAN) convertissant les signaux analogiques en signaux numériques prêts à être traités par un processeur. Dans un système de traitement d'antenne, les CAN des différentes voies sont synchronisés et l'ensemble de ces CAN constitue le système d'échantillonnage multi-voie 12. Ces différents éléments étant connus de l'Homme du métier ne seront pas détaillés dans la présente demande.
- d'un système de traitement 13 des sorties échantillonnées visant à estimer les quantités $T_n(f_i)$, $1 \le i \le M$, et à en déduire les réponses $h_n(f_i)$, gabarits des corrections en fréquence.

Le signal de tarage représenté à la figure 4 présente un niveau ajustable. Il correspond, par exemple, à une sinusoïde dont la fréquence est balayée au moyen d'un synthétiseur programmable, sur toute la bande numérisée par pas de $\Delta f$. Le nombre M de positions fréquentielles dans la bande de numérisation $F_e$ est alors égal à $M = \text{Ent}(F_e/\, \Delta f)$ ou $M = \text{Ent}(F_e/\, \Delta f) + 1$ selon le centrage de l'échantillonnage en fréquence.
En pratique, si le spectre de la sinusoïde est calculé à partir d'une durée d'observation de celle-ci notée $T$, un sinus cardinal de largeur de bande à 3 dB de l'ordre de $1/T$ se substitue à la raie spectrale.
Le système d'injection du signal de tarage a notamment pour objectif de substituer aux sorties des capteurs, un signal de tarage équi-phase et équi-amplitude à l'entrée des chaînes de réception. Le signal capteur est substitué par le signal de tarage et ce signal de tarage est, en pratique, sensiblement identique sur les différentes voies.

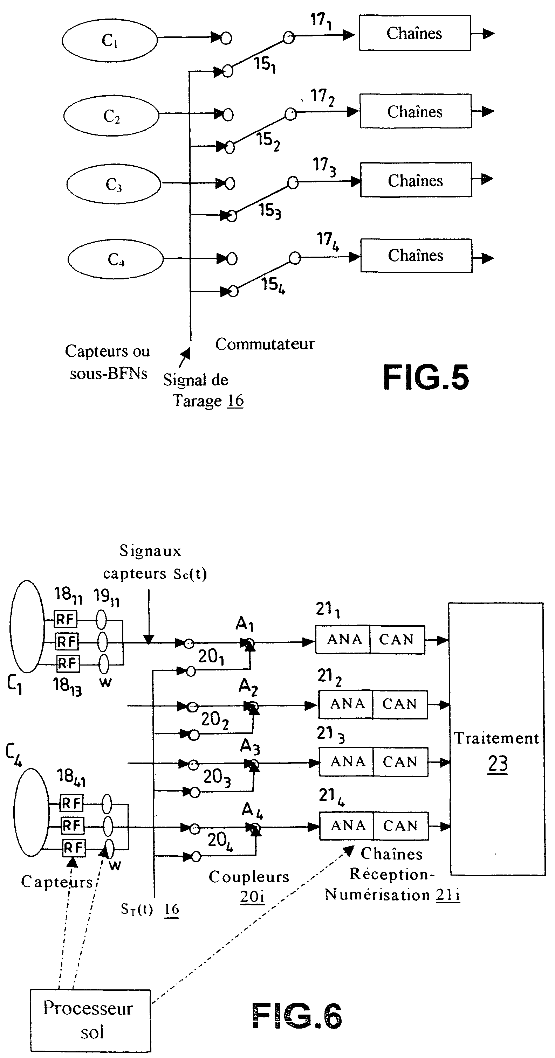

La figure 5 schématise un premier dispositif connu de l'Homme du métier utilisant des commutateurs 15i. La substitution des signaux capteurs par un signal de tarage s'effectue de la façon suivante : le commutateur 15i commute de façon à ce que les différentes voies i soient reliées à la voie 16 qui permet l'injection du signal de tarage et ceci simultanément sur toutes les entrées 17i. L'injection simultanée s'effectue pour chaque position de la raie.

Les performances de cette commutation sont notamment liées à celle du commutateur en terme d'appairage et d'isolation.

La présente invention concerne plus particulièrement un procédé reposant sur une approche découplée de tarage-égalisation.

L'invention concerne un dispositif de tarage et d'égalisation de chaînes de réception d'un système de traitement d'antennes comprenant plusieurs chaînes RF (radio-fréquence) associées chacune à un élément rayonnant, un ensemble de capteurs formés Ci à partir des sorties des chaînes RF précédentes, des moyens d'injection d'un signal de tarage, des moyens de couplage du signal de tarage aux signaux capteurs, plusieurs chaînes de réception-numérisation comme décrit dans le document US 6 205 341 B1. Il est caractérisé en ce qu'il comporte au moins :

- un processeur adapté à gérer l'ensemble des dispositifs,
- un moyen permettant d'ajuster la valeur du gain d'une chaîne RF à une valeur minimale Gmin,
- un moyen de dépointage des capteurs adapté à minimiser leur directivité en direction des brouilleurs,
- un moyen adapté à ajuster le niveau du signal de tarage ST injecté par rapport au signal des capteurs,
- une chaîne RF ayant un gain réglé à une valeur minimale Gmin.

Les moyens d'injection du signal de tarage sont par exemple des coupleurs (20i).

L'invention concerne aussi un procédé de tarage et d'égalisation de chaînes de réception d'un système de traitement d'antennes comprenant plusieurs chaînes RF, une par élément rayonnant, plusieurs chaînes RF étant associées à un capteur formé Ci. Il est caractérisé en ce qu'il comporte au moins les étapes suivantes :

- Injecter un signal de tarage $S_T(t)$ au niveau des signaux capteurs $S_C(t)$,
- Régler la valeur du gain des chaînes RF (18ij) à une valeur minimale de gain Gmin,
- Ajuster le signal de tarage $S_T(t)$ injecté en fonction du niveau du signal des capteurs,
- Dépointer les capteurs Ci afin de minimiser leur directivité en direction des brouilleurs.

L'injection du signal de tarage est par exemple effectué au moyen de coupleurs.

Le dispositif selon l'invention présente notamment comme avantage d'être sans commutateurs et d'offrir une stratégie de réglage qui permet d'envisager le tarage des voies de réception y compris en présence d'un brouillage fort reçu par les capteurs du réseau.

D'autres avantages et caractéristiques de la présente invention apparaîtront mieux à la lecture de la description qui suit, donnée à titre illustratif et nullement limitatif, annexée des figures qui représentent :

- La figure 1 un synoptique d'un système de goniométrie ou d'antibrouillage,
- La figure 2 un synoptique de l'opération générique d'égalisation des chaînes de réception,
- La figure 3 un synoptique de l'opération générique d'un système de tarage des chaînes de réception,
- La figure 4 un signal de tarage,
- La figure 5 un dispositif d'injection du signal de tarage par commutation,
- La figure 6 un dispositif d'injection du signal de tarage par coupleurs,
- La figure 7 un exemple de gabarit de filtres égaliseurs avant gestion des effets de bord,
- La figure 8 un exemple de gabarit des filtres égaliseurs après gestion des effets de bords,
- La figure 9 un exemple de schéma fonctionnel du séquencement des opérations de mise en oeuvre du système tarage/égalisation/vérification selon l'invention,
- La figure 10 un schéma fonctionnel du système de balayage des sous BFNs,
- La figure 11 l'ensemble des directions de pointage des sous BFNs,

L'invention propose une nouvelle approche notamment dans le choix des matériels, dans le choix des procédures de tarage/égalisation et propose également une étape de vérification après tarage/égalisation. Enfin une mise en oeuvre à partir du sol d'un tel système embarqué sur un satellite géostationnaire est également développée.

Le dispositif de tarage selon l'invention comporte, par exemple, plusieurs coupleurs $20_1$, $20_2$, $20_3$, $20_4$, fonctionnant dans des conditions choisies de manière judicieuse. Il comporte aussi différents moyens permettant d'ajuster le niveau du signal de tarage, il s'agit de l'ajustement du niveau absolu du signal de tarage, du réglage des gains RF et des moyens de dépointage électronique des antennes, un processeur disposé par exemple au sol qui va gérer l'ensemble. Le processeur est adapté à contrôler le pointage, les gains RF et les gains des chaînes de réception/numérisation.

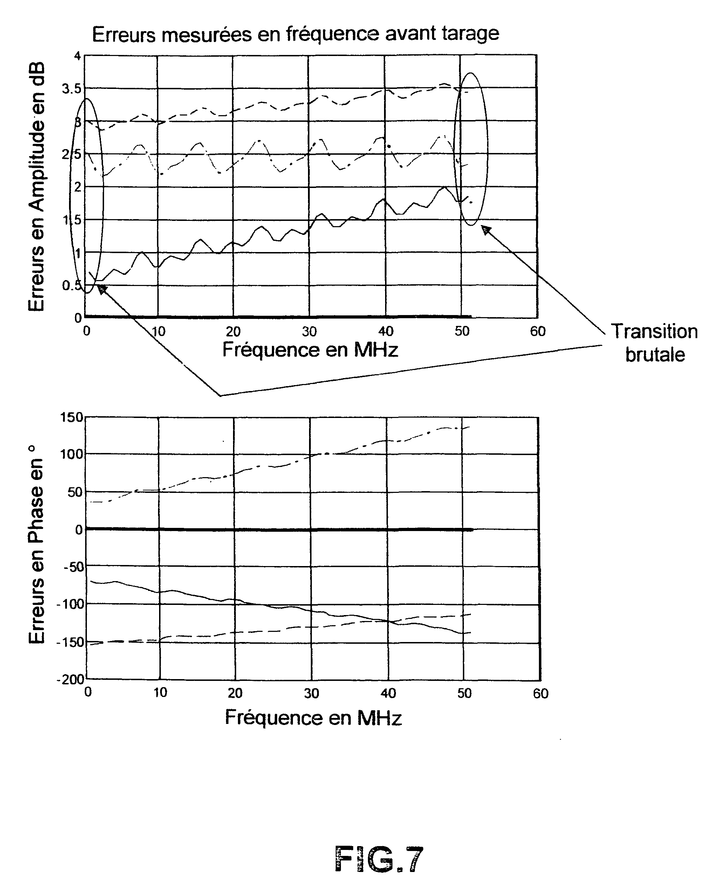

Le dépointage peut aussi être réalisé de façon mécanique. Les éléments donnés à la figure 1 se retrouvent dans le dispositif bien qu'ils ne soient pas représentés sur la figure 6 pour des raisons de simplification. Le réglage des gains RF est réalisé en modifiant le gain G et le dépointage en modifiant W au niveau de la formation des sous-réseaux. Ces opérations connues de l'Homme du métier ne seront pas explicitées dans la présente demande de brevet.

Pour le dépointage, une loi est par exemple chargée à bord et lorsque l'on souhaite la charger, on le fait grâce à une Télécommande envoyée du sol. C'est indépendant du traitement bord. De même pour le réglage du gain, les calculs de gain sont faits au sol et une télécommande envoyée du sol permet de régler sa valeur là haut. C'est indépendant du traitement bord.

Un exemple de réalisation est donné à la figure 6. Sur cette figure, la substitution des signaux capteurs $S_c(t)$ par les signaux de tarage $S_T(t)$ s'effectue par couplage de ces deux signaux réalisé au moyen d'un coupleur 20i au point Ai en respectant la condition suivante : obtenir au niveau de chacune des voies Vi, un signal de tarage de niveau supérieur (par exemple de quelques dizaines de dB) à celui des signaux capteurs $S_c(t)$ quel que soit l'environnement, que les perturbations soient faibles ou fortes.

Les capteurs dont les sorties sont numérisées sont des capteurs dits formés ou sous-BFNs, à partir de capteurs élémentaires appelés éléments rayonnants (ER). Cette formation rend les sous-BFNs directifs et s'effectue en sommant les sorties des ER préalablement amplifiées et filtrées par des chaînes dites RF (composées par exemple d'amplis faible bruit et des filtres) et pondérées en phase et en amplitude. Les chaînes de réception-numérisation à égaliser sont des chaînes qui travaillent en Fréquence Intermédiaire (FI) après transposition de fréquence selon des méthodes connues de l'Homme du métier.

Ce différentiel de niveau entre les signaux capteurs et les signaux de tarage en faveur de ces derniers est obtenu par exemple :

- en limitant au maximum le niveau des signaux Sc(t) issus des capteurs ou sous-BFNs. Cette limitation est notamment possible :

  - en réglant le gain radio des chaînes RF 18ij (i est le numéro du sous-BFN et j le numéro de l'élément rayonnant dans le sous-BfN. ij signifie donc élément rayonnant j du sous-BFN i.
  - en amont du coupleur 20i ($20_1$, $20_2$, $20_3$, $20_4$) à une valeur minimale $G_{min}$.
  - en dépointant, en dehors de la terre par exemple dans le cas d'une application satellite, les capteurs Ci formés, afin de minimiser la directivité de ces capteurs en direction d'éventuels brouilleurs,

- en ajustant judicieusement le niveau du signal de tarage $S_T$ injecté par la voie 16 afin d'obtenir les quelques dizaines de dB de différentiel de niveau entre le signal de tarage et les signaux issus des capteurs.

L'entrée des chaînes de réception-numérisation 21i voit ainsi le signal de tarage $S_T(t)$ et le signal capteur $S_c(t)$ couplés.

Le procédé selon l'invention comporte une étape de réglage des gains des chaînes RF en amont des coupleurs sous des conditions choisies avec une connaissance a priori ou non de l'environnement du capteur.

Avantageusement, cette stratégie de réglage permet d'envisager le tarage des voies de réception y compris en présence d'un brouillage fort reçu par les capteurs du réseau.

La description qui suit présente un exemple de procédure de tarage, de procédure d'égalisation, puis un exemple de séquencement d'une procédure complète tarage/égalisation/vérification.

**Procédure de tarage des chaînes de numérisation**

Comme il a été mentionné dans l'introduction présentant l'art antérieur, la procédure de tarage des chaînes de réception comporte une étape d'estimation des réponses en fréquence $T_n(f)$ et la détermination des caractéristiques des filtres égaliseurs $H_k(z)$ en conséquence.

Dans cet exemple de réalisation, le procédé opère par exemple de la manière décrite ci-après.

Le procédé utilise un système de traitement des sorties échantillonnées ramenées en bande de base, vecteur d'observations $x(k)$ ($0 \leq k \leq K - 1$), où $K$, puissance de 2, est le nombre d'échantillons considérés par sortie de chaîne de réception conçu et adapté pour :

- estimer les réponses en fréquence $T_n(f_i)$ ramenées en bande de base pour $1 \leq n \leq N$ (N étant le nombre de capteurs) et $1 \leq i \leq M$, (M le nombre de positions fréquentielles),
- estimer les réponses en fréquence en bande de base $h_n(f_i) = T_1(f_i) / T_n(f_i)$ pour $1 \leq n \leq N$ et $1 \leq i \leq M$.

Plus précisément, pour chaque valeur de $n$ et pour chacune des $M$ positions fréquentielles $f_i$, $1 \leq i \leq M$, de la

raie i dans la bande numérisée, le procédé estime la quantité $T_n(f_i)$ ramenée en bande de base de la manière suivante :

- il calcule par exemple, au moyen d'une Transformée de Fourier Discrète (TFD) des $K$ échantillons $x_{ni}(k)$ acquis sur la voie $n$ pour la raie $i$, la réponse en fréquence $X_n(l_i)$ pour le canal discret $l_i$ associé à la raie $f_i$ :

$$X_n(l_i) \quad = \sum_{k=0}^{K-1} \ x_{ni}(k) \ \exp(-j2\pi k l_i / K) \qquad\qquad (10)$$

où $l_i$ est lié à $f_i$ par la relation suivante

Si $f_i < F_e/2$ : $l_i$ = Near[$K\, f_i/F_e$] + $K / 2$     (modulo K)

Si $f_i \geq F_e/2$ : $l_i$ = Near[$K\, f_i/F_e$] - $K/2$     (modulo K)

où Near(x) correspond à l'entier le plus proche de x.

- Après avoir calculé la réponse en fréquence pour la voie de référence $X_1(l_i)$ par la procédure décrit précédemment, le procédé détermine la valeur estimée, $\hat{h}_n(l_i)$, de $h_n(f_i)$ ramenée en bande de base (entre [-$F_e/2$, $F_e/2$]), par $\hat{h}_n(l_i)$ = $X_1(l_i) / X_n(l_i)$.

En fait, $h_n(f_i) = T_1(f_i) / T_n(f_i)$ et $h_n(l_i)$ correspond à $h_n(f_i)$ ramené en bande de base en tenant compte du fonctionnement de la TFD par FFT.

A l'issue de cette étape de tarage, le procédé dispose des valeurs estimées, $\hat{h}_n(l_i)$, des réponses en fréquence ramenées en bande de base, des caractéristiques des filtres égaliseurs relatifs aux voies 1 à $N$ ($1 \leq n \leq N$) pour les fréquences $l_i$, ($1 \leq i \leq M$), de la bande [-$F_e/2$, $F_e/2$]. Notons que $h_1(l_i)$ = 1 pour toutes les fréquences $l_i$, ce qui signifie que les échantillons de la voie 1, voie de référence, ne sont pas égalisés.

Les quantités $h_n(l_i)$ correspondent aux gabarits en bande de base des filtres égaliseurs.

## Procédure d'égalisation des chaînes de numérisation

La procédure d'égalisation est structurée par exemple en plusieurs étapes présentées globalement puis détaillées.

1. La première étape consiste à gérer au mieux les effets de bord des filtres égaliseurs, on obtient $\hat{h}_n(l_i)$ gabarit fréquentiel du filtre égaliseur.

2. La seconde étape consiste à choisir le nombre de coefficients, $R$, pour synthétiser un filtre égaliseur à RIF dont la réponse en fréquence approche au mieux le gabarit fréquentiel lissé issu de l'étape du tarage et de la gestion des effets de bord. Une approche possible pour cette synthèse correspond à une approche par exemple par FFT. Les filtres qui en résultent sont par exemple des filtres interpolateurs, lesquels pondèrent aussi bien le présent que le passé.

3. La troisième étape consiste, d'une part, à filtrer les échantillons $x_{ni}(k)$ issus des voies de réception par les réponses impulsionnelles des filtres égaliseurs précédemment calculés (étape de tarage) et d'autre part à retarder judicieusement les échantillons $x_{1i}(k)$ de la voie de référence 1, non égalisée, de manière à compenser l'avance de phase de ces échantillons par rapport aux échantillons égalisés des autres voies, induite par l'opération de filtrage non causal des voies 2 à N

## 1 - Gestion des effets de bord

- L'objectif est d'égaliser les réponses des voies de réception au sein de la bande de réception utile $B$, laquelle est inférieure à la bande de numérisation $F_e$. Or, en pratique, les voies de réception peuvent présenter des réponses différentielles de fortes amplitudes en dehors de la bande utile, ce qui peut engendrer la nécessité de considérer des filtres égaliseurs à Réponse Impulsionnelle Finie (RIF) à grand nombre R de coefficients ou ce qui peut dégrader les performances de l'égalisation au sein de la bande utile si on fixe arbitrairement le nombre de coefficients des filtres égaliseurs à RIF. Pour cette raison, il est souhaitable d'imposer, en dehors de la bande utile, une réponse en fréquence relativement lissée dont le but est de limiter les dégradations au sein de la bande utile à nombre de coefficients fixés. (La bande de transition est la portion de la bande de numérisation (de largeur $F_e$) qui se situe en dehors de la bande utile. La bande de transition a donc une bande de $F_e$ - B).

Une méthode de gestion des effets de bord est décrite ci-après. Elle repose notamment sur les hypothèses suivantes : les gabarits en fréquence, en amplitude et en phase, des filtres égaliseurs estimés déterminés au cours de la phase de tarage n'ont physiquement aucune raison de présenter des valeurs identiques aux deux bouts de la bande scrutée, c'est-à-dire pour les fréquences - $F_e/2$ et $F_e/2$ pour la représentation en bande de base et pour les fréquences 0 et $F_e$ pour la représentation en fréquence intermédiaire, dans la mesure où les erreurs à égaliser en début de bande sont en général très différentes de celles en fin de bande. Pour illustrer ces propos, la figure 7 donne un exemple typique de relevé, par le tarage, du gabarit des filtres égaliseurs, en amplitude et en phase, entre 0 et $F_e$, où la courbe (I) (phase = 0 et amplitude = 0 dB) correspond à la voie de référence 1. Les autres courbes (II), (III), (IV) correspondent aux 3 autres voies de réception.

Les filtres numériques ayant une réponse en fréquence prériodique, cette discontinuïté de valeurs de gabarits en bouts de bande est à l'origine de problèmes rencontrés lors de l'opération de synthèse de ce gabarit par un filtre à RIF dont le nombre de coefficients est imposé. En effet, la contrainte d'un nombre de coefficients limité conjointement à la discontinuité précédemment décrite sont des sources de distorsion du gabarit à synthétiser dans la bande de réception et cette distorsion croît lorsque le nombre de coefficients imposé décroît. En particulier, les bouts de bande (au sein d'une certaine bande de transition) ont toutes les chances de ne pas être correctement égalisés.

Afin de pallier ces inconvénients, le procédé selon l'invention opère de la manière décrite ci-après.

L'idée directrice est de forcer la réponse en fréquence des filtres égaliseurs pour les points de mesures situés dans une petite bande de transition, en début et fin de bande, à des valeurs, déterminées arbitrairement, telles que la continuité en bouts de bande soit assurée.

La méthode choisie est par exemple l'interpolation linéaire en amplitude et en phase sur les points de la bande de transition $B_T$ entre le dernier point de mesure de la bande numérisée $B_N$ de largeur Fe et le premier point de mesure de celle-ci (ce premier point étant vu comme celui de la bande numérisée de la période suivante de mesures). Cette méthode présente notamment comme avantages d'être à la fois simple et de minimiser les variations amplitude / phase, ce qui libère un maximum de coefficients des filtres pour le tarage de la bande utile.

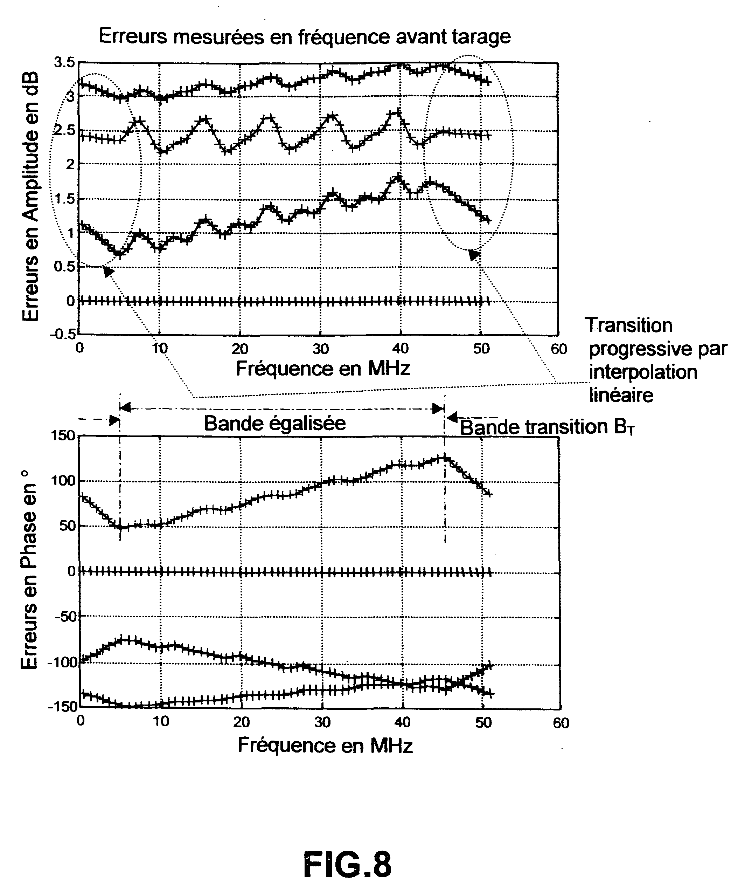

La figure 8 illustre la mise en oeuvre de cette méthode pour le cas du relevé de tarage de la figure 7.

## 2 - Synthèse d'un filtre égaliseur à RIF

La méthode de calcul des filtres égaliseurs par FFT inverse présente l'avantage d'être simple conceptuellement et de ne nécessiter seulement qu'un strict minimum de calculs. Elle suppose que la valeur $M$ des positions des raies soit une puissance de 2. L'idée consiste alors, pour chacune des voies $n$, $2 \le n \le N$:

- à considérer que la suite des $M$ échantillons fréquentiels, $\hat{h}_n(l_i)$ ($1 \le i \le M$), correspond aussi à la suite $\hat{h}_n(u_i + \delta) \underline{\triangleq} h_{n,\delta}(u_i)$ ($1 \le i \le M$) où $u_i = l_i - \delta$ et où $\delta$ correspond à la valeur de $l_i$ la plus proche de zéro. Ainsi, zéro correspond à l'une des valeurs de $u_i$. Dès lors, l'échantillon temporel numéro $k$, $h_{n,\delta}(k)$, de la Transformée de Fourier Discrète inverse de la suite d'échantillons fréquentiels $h_{n,\delta}(u_i)$ s'écrit $h_{n,\delta}(k) = \exp(-j2\pi\delta k/M)) h_n(k)$ où $h_n(k)$ est la TFD inverse de la suite $h_n(u_i)$.

- à calculer la transformée de Fourier inverse, $h_n(k)$ ($0 \le k \le M - 1$), des $M$ échantillons fréquentiels, $\hat{h}_n(u_i)$ ($1 \le i \le M$). Pour ce faire :

  - la suite $\hat{h}_n(l_i)$, correspondant à une représentation fréquentielle entre $[-F_e/2, F_e/2]$ est périodisée de manière à obtenir une représentation entre $[0, F_e]$. On obtient la suite $\hat{h}_n(l_i)'$.
  - on construit la Transformée de Fourier inverse de la suite $\hat{h}_n(l_i)'$, laquelle donne la suite d'échantillons temporels $h_n(k)$

- à construire la suite $\hat{h}_{n,\delta}(k) = \exp(-j2\pi\delta k/M)) \hat{h}_n(k)$ ($0 \le k \le M - 1$), puis une version non causale de cette suite, en réordonnant ces coefficients. On construit alors la suite : $[h_{n,\delta}((M - 2)/2 + 1),......, h_{n,\delta}((M - 1), h_{n,\delta}(0), h_{n,\delta}(1), ...., h_{n,\delta}((M - 2)/2)]$.
- à tronquer la suite non causale précédente à $R$ valeurs, en éliminant les premières et dernières valeurs de la suite. On obtient alors, pour $R = 2q + 1$, une suite notée $H_{n,\delta} = [h_{n,\delta}(-q),...., h_{n,\delta}(-1), h_{n,\delta}(0), h_{n,\delta}(1), ...., h_{n,\delta}(q)]$. Cette suite est la suite des coefficients du filtre égaliseur de la voie $n$.

Le gabarit fréquentiel du filtre égaliseur n est issu du tarage et de la gestion des effets de bord. Il correspond à $\hat{h}_n(l_i)$. C'est précisément à partir de ce gabarit que les coefficients du filtre égaliseur de la voie n sont calculés par FFT inverse.

## 3 - Application des filtres égaliseurs

Le procédé opère de la manière suivante :

Pour chacune des voies $n$, $2 \leq n \leq N$, (autre que la voie de référence) le procédé dispose de la suite des coefficients du filtre égaliseur $H_{n,\delta} = [h_{n,\delta}(- q),....., h_{n,\delta}(- 1), h_{n,\delta}(0), h_{n,\delta}(1), ...., h_{n,\delta}(q)$ ainsi que des échantillons $x_n(m)$ ($0 \leq m \leq K$), $K + 1 \geq R$, issus de la chaîne de réception $n$. Dès lors, la sortie de l'égaliseur $n$ et celle de la voie 1 à l'instant $k$ ($0 \leq k \leq K + 1 - R$) s'écrivent :

$$y_n(k) \quad = \sum_{i=-q}^{q} \quad \hat{h}_{n,\delta}(i) \; x_n(k - i + q) \;\; (2 \leq n \leq N) \qquad\qquad (11)$$

$$y_1(k) = x_1(k+q) \qquad\qquad (12)$$

En effet, de manière à pouvoir compenser aussi bien des avances que des retards, il est nécessaire de considérer que la sortie k des filtres égaliseurs correspond à la sortie compensée des chaînes de réception à l'instant k - Δ où, pour des raisons de symétrie, Δ est choisi égal à la demie longueur des filtres égaliseurs en nombre d'échantillons. Ainsi, la compensation de l'échantillon x(k - Δ) doit se faire en tenant compte d'autant d'échantillons antérieurs que d'échantillons postérieurs à l'instant k - Δ. Dans ces conditions, la voie de référence doit suivre la même logique d'où le retard à introduire.

**Vérification des opérations de tarage/égalisation**

Selon une variante de réalisation, le procédé selon l'invention comporte une étape de vérification du bon fonctionnement de la procédure de tarage/égalisation et de détection de pannes des chaînes de réception. Pour cela deux approches peuvent être mises en oeuvre.

**A. Procédé n'utilisant pas les échantillons égalisés**

Pour chacune des voies $n$, $2 \leq n \leq N$, on dispose de la suite des coefficients du filtre égaliseur $\hat{H}_{n,\delta} = [\hat{h}_{n,\delta}(-q),..., h_{n,\delta}(- 1), h_{n,\delta}(0), h_{n,\delta}(1), ...., h_{n,\delta}(q)]$. En fonctionnement normal, les erreurs différentielles entre chaînes, avant la procédure d'égalisation, sont bornées inférieurement et supérieurement par des valeurs connues aussi bien en phase qu'en amplitude. En d'autres termes, on peut écrire a priori

$$A_{min} \leq |\hat{h}_{n,\delta}(i)| \leq A_{max} \qquad -q \leq i \leq q$$

$$\phi_{min} \leq Arg(\hat{h}_{n,\delta}(i)) \leq \phi_{max} \qquad -q \leq i \leq q \qquad\qquad (14)$$

où $A_{min}$, $A_{max}$, $\phi_{min}$ et $\phi_{max}$ sont des valeurs réelles connues a priori.
Dès lors, tout dépassement de ces bornes, inférieurement ou supérieurement, peut laisser supposer soit un mauvais fonctionnement de l'opération de tarage/égalisation soit une panne de la voie de réception associée. Ce diagnostic sera porté si il existe un indice i, $-q \leq i \leq q$, tel que

$$|\hat{h}_{n,\delta}(i)| \leq A_{min} \text{ ou } A_{max} \leq |\hat{h}_{n,\delta}(i)|$$

ou

$$\phi_{max} \leq Arg(\hat{h}_{n,\delta}(i)) \text{ ou } Arg(\hat{h}_{n,\delta}(i)) \leq \phi_{min} \qquad\qquad (15)$$

Dans cette approche l'originalité consiste à détecter une panne uniquement à partir de l'observation des coefficients des filtres égaliseurs. Les bornes sont supposées connues a priori.
Notons que le même type de raisonnement peut être effectué dans le domaine fréquentiel sur les gabarits en fréquence des filtres égaliseurs.

**B. Procédé utilisant les échantillons égalisés**

A partir des échantillons $x_{nj}(k)$ ($0 \leq k \leq K - 1$) acquis en sortie de la chaîne de réception $n$ excitée par la raie $f_j$, on construit les sorties, $y_{nj}(k)$, du filtre égaliseur associé à la voie $n$ pour l'excitation considérée

$$y_{nj}(k) \quad = \quad \sum_{i=-q}^{+q} \quad \hat{h}_{n,\delta}(i) \; x_{nj}(k-i+q) \quad (0 \leq k \leq K+1-R) \quad (16)$$

où q correspond au nombre d'échantillons de la voie 1 retardés.

Dès lors, on calcule l'erreur complexe moyenne associée à la voie $n$ et à la raie $j$ définie par

$$e_{nj} \quad = \quad 1/(K-R) \sum_{k=0}^{K+1-R} (y_{nj}(k) - y_{1j}(k)) \quad (0 \leq k \leq K+1-R) \quad (17)$$

Dans ces conditions, un dysfonctionnement de l'opération de tarage/égalisation de la voie $n$ ou une panne de cette voie est détecté si il existe au moins une position de raie $j$ telle que

$$E_{max} \leq |e_{nj}| \qquad \text{ou} \qquad E_{max} \leq \text{Arg}(e_{nj}) \qquad (18)$$

où $E_{max}$ et $\phi E_{max}$ sont des seuils décidés a priori.

Les seuils correspondent aux erreurs maximales tolérables par la fonction localisation pour tenir le cahier des charges de performances. Ces seuils sont donc connus a priori suite aux phases de prédéveloppements.

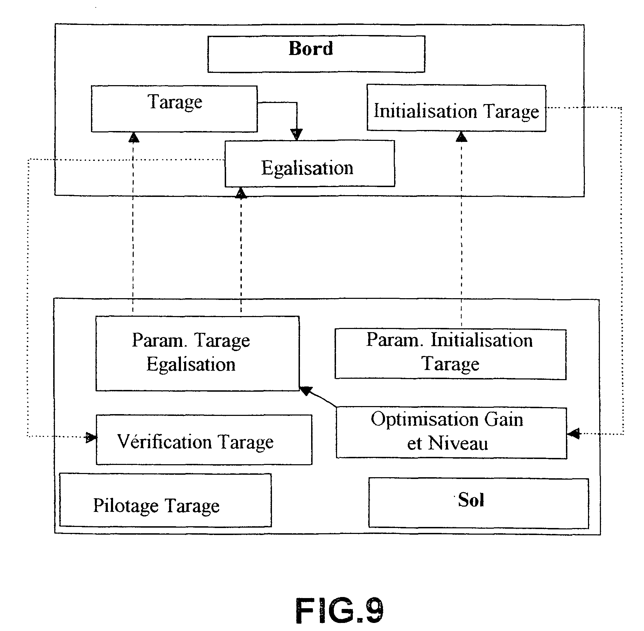

La figure 9 représente un exemple de procédure complète de mise en oeuvre, à partir du sol, des procédures de tarage/égalisation/vérification décrites dans les paragraphes précédents.

**Séquencement général des opérations**

Toutes ces opérations sont télécommandées du sol, soit automatiquement, soit manuellement par un opérateur.

Le séquencement général des opérations proposé, illustré sur la figure 9, met en oeuvre, à partir du sol et pour une bande de réception $B$ donnée (bande numérisée), les fonctions suivantes :

- *Initialisation Tarage* : dont le but est d'évaluer grossièrement le niveau de brouillage ambiant, à partir d'un balayage, sur tout ou partie de la terre (les brouilleurs présents doivent être à l'intérieur de la zone balayée), d'un seul ou de plusieurs sous-BFNs constituants les N capteurs formés à bord du satellite. Cette fonction est une fonction Bord paramétrée du Sol par la fonction *Param Initialisation Tarage.*
- *Optimisation Gain et Niveau:* dont le but est d'optimiser, à partir des résultats de l'initialisation Tarage, d'une part le gain des chaînes de réception à tarer de manière à exploiter au mieux la dynamique de codage des CAN des chaînes de numérisation sans saturer celles-ci et d'autre part, le niveau du signal de tarage . Cette fonction est une fonction Sol. Le gain mentionné ici fait référence au gain de la chaîne de numérisation FI. En effet, le gain des chaînes RF est par exemple mis au niveau minimal pour recevoir le moins de signal externe possible en sortie du coupleur. Le gain FI est celui qui sera utilisé par la fonction localisation après le tarage et l'égalisation. Il dépend du niveau de brouillage ambiant et doit éviter la saturation des récepteurs de loc tout en permettant d'exploiter la dynamique maximale au niveau du CAN. Une fois ces paramètres figés, le niveau de signal de tarage doit être tel que, pendant le tarage, le rapport du signal de tarage sur les signaux externes issus du coupleur soit suffisant.
- *Tarage* : dont le but est le tarage à proprement parlé des chaînes de réception. Cette fonction est une fonction Bord, paramétrée du sol par la fonction *Param Tarage Egalisation*
- *Egalisation* : dont le but est la construction des filtres égaliseurs associés aux voies de réception. Cette fonction est une fonction Bord oeuvrant sur les résultats de la fonction Tarage et paramétrée par la fonction *Param Tarage Egalisation*
- *Vérification Tarage* : dont le but est la vérification du bon fonctionnement de l'opération de tarage/égalisation et/ou la détection de pannes des voies de réception. Cette fonction est une fonction Sol paramétrée par la fonction *Param Tarage Egalisation.*

Le séquencement général de ces opérations ainsi que les fonctions de paramétrisation des différents appels sont contrôlés par la fonction Pilotage_Tarage.

**Fonction Param Initialisation Tarage**

Sur réception de la demande de tarage/égalisation par une instance externe au système (direction des opérations, opérateur...), la fonction Pilotage Tarage lance la fonction Param Initialisation Tarage dont le rôle est d'élaborer les paramètres nécessaires à l'initialisation Tarage. Ces paramètres sont par exemple :

- l'identifiant de la couverture considérée du satellite,
- l'identifiant du canal fréquentiel de bande *B* à tarer,
- le gain de la chaîne de numérisation à utiliser pour l'initialisation Tarage. Nominalement ce gain est réglé à sa valeur minimale,
- la liste des identifiants des lois de pondérations des sous-BFNs à utiliser pour la production des mesures de puissance par la fonction Initialisation Tarage. Ces lois font partie de la table des lois chargée à bord et sont traitées séquentiellement. Ces lois correspondent à des jeux de pondération amplitude-phase permettant la formation d'un faisceau dans une direction donnée avec un minimum de lobes secondaires dans les autres directions.

**Fonction Initialisation Tarage**

La fonction Initialisation Tarage a pour but d'évaluer grossièrement le niveau de brouillage ambiant sur le canal considéré à partir d'un balayage des sous-BFNs constituants les N capteurs formés à bord du satellite. Cette évaluation est faite par construction au sol d'une cartographie des puissances mesurées pour chaque pointage des sous-BFNs balayés.

A partir des paramètres issus de la fonction Param Initialisation Tarage, la fonction Initialisation Tarage met en oeuvre les opérations suivantes :

- Réglage du gain des voies de numérisation,
- Boucle sur les pointages des sous-BFNs contenus dans la table de lois avec, pour chaque pointage :

- Application de la loi,
- Mesure de puissance en sortie,
- Transfert au sol de la puissance mesurée,
- Détermination du niveau de brouillage ambiant,

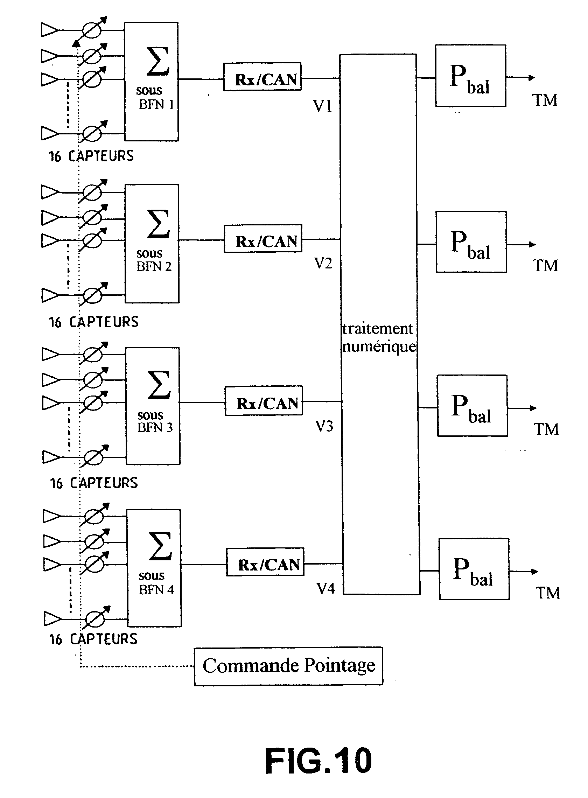

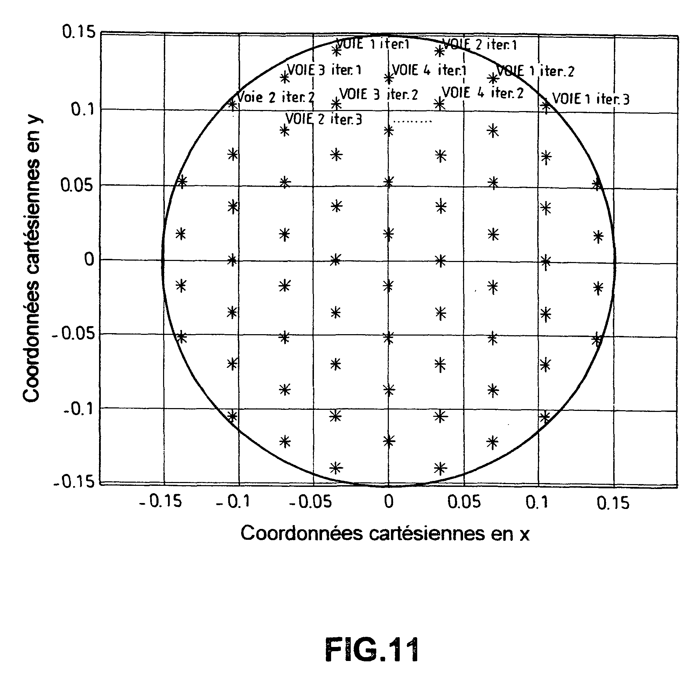

Le schéma fonctionnel du système de balayage des sous-BFNs (ou capteurs) est présenté à la figure 10. Les puissances mesurées sont celles associées aux sorties des sous-BFNs (au nombre de 4 sur le schéma). Pour accélérer la procédure, les 4 sous-BFNs peuvent être utilisés simultanément en balayant des zones différentes. L'ensemble des pointages des sous-BFNs constitue un quadrillage de la terre comme le montre la figure 11.

A l'issue de cette procédure, on dispose au sol d'une cartographie des puissances mesurées pour les positions du quadrillage de la figure 11. Le niveau de brouillage ambiant (PIRE équivalente au sol ou flux incident équivalent) est alors estimé à partir de la puissance maximale répertoriée sur la cartographie de puissance, des pertes de propagation, des caractéristiques des sous-BFNs et du gain des chaînes de réception.

**Fonction Optimisation Gain-Niveau**

A partir des résultats de la fonction Initialisation Tarage, la fonction Optimisation Gain-Niveau a notamment pour buts :

- d'optimiser le gain des chaînes de réception-numérisation à tarer afin d'exploiter au mieux la dynamique de codage des CAN sans saturer ceux-ci lors des phases ultérieures de traitement d'antenne (localisation, antibrouillage...). Plus précisément, ce gain est calculé à partir des résultats de l'Initialisation Tarage, du gain initial des chaînes de réception, des pertes de propagation, des réponses des sous-BFNs de sorte que le maximum de puissance observé par la fonction Initialisation Tarage corresponde au niveau maximal du signal en entrée du CAN avec une marge liée aux imprécisions de mesures,

- d'optimiser le niveau du signal de tarage à injecter, à partir des résultats de l'initialisation Tarage et du gain précédent, de manière à générer un bon rapport S/B (au moins 20 dB par exemple) associé sur chacune des raies balayées. En outre, ce réglage vise également à éviter d'injecter un signal de tarage trop puissant (en absence de résidu de brouillage pour le dispositif avec coupleurs) qui, par diaphonie entre chaînes de réception et entre sous-BFNs, pourrait perturber les voies de communication du satellite.

**Fonction Param Tarage Egalisation**

Le rôle de la fonction Param Tarage Egalisation est d'élaborer les paramètres nécessaires aux fonctions Tarage, Egalisation et Vérification Tarage. Ces paramètres sont par exemple:

- l'identifiant de la couverture considérée du satellite,
- l'identifiant du canal fréquentiel de bande $B$ à tarer,
- le gain de la chaîne de numérisation à utiliser pour le Tarage ainsi que le niveau de signal de tarage à injecter, tous deux issus de la fonction Optimisation Gain-Niveau,
- le numéro de la voie de référence choisie (voie 1 dans ce document)
- le nombre de coefficients, $R$, des filtres égaliseurs à RIF,
- la position de la première raie, l'écart fréquentiel entre raies et le nombre $M$ de raies à considérer pour le signal de tarage dans la bande [0, $Fe$],
- Le nombre d'échantillons $K$ de chaque raie à considérer pour le tarage,
- un indicateur précisant si les coefficients des filtres égaliseurs sont à envoyer au sol ou non,
- un indicateur précisant si les échantillons de sortie des filtres égaliseurs sont à envoyer au sol ou non,
- les jeux de pondération des sous-BFNs permettant un dépointage de ceux-ci hors de la terre pendant le tarage pour le dispositif avec coupleurs.

**Fonction Tarage**

A partir des paramètres de la fonction Param Tarage Egalisation, la fonction Tarage, dont le but est le tarage des chaînes de réception, c'est-à-dire l'apprentissage des gabarits différentiels (apprentissage des gabarits différentiels entre voies de réception pour en déduire les gabarits des filtres égaliseurs) des chaînes de réception, met en oeuvre les opérations suivantes :

- dépointage de sous-BFNs hors de terre pour le dispositif avec coupleurs proposé,
- réglage du gain des chaînes de réception,
- injection du signal de tarage en entrée des $N$ voies, par couplage, avec une boucle sur les positions de raies (on balaye la raie sur toute la bande numérisée par pas de $\Delta f$ et pour chaque position on fait une mesure du gabarit différentiel des voies par rapport à la voie de référence). Pour chaque position de raie :

  - Calcul des gabarits et des gabarits différentiels des chaînes de réception par le traitement du paragraphe IV

Les sorties de la fonction Tarage sont :

- la date et l'heure de lancement de la fonction, générées par l'opérateur sol,
- un rapport de tarage (Echec ou réussite), généré par exemple automatiquement par le bord si le processus a pu être mené à terme,
- les gabarits différentiels des chaînes de réception, (gabarits des filtres égaliseurs).

**Fonction Egalisation**

A partir des paramètres de la fonction Param Tarage Egalisation et des résultats de la fonction Tarage, la fonction Egalisation, dont le but est l'égalisation des chaînes de réception, c'est-à-dire la compensation des réponses différentielles des voies de réception, met en oeuvre les opérations suivantes :

- Gestion des effets de bord (paragraphe B),
- Synthèse du Filtre à RIF (paragraphe C),
- Egalisation des réponses (paragraphe D),

Les sorties de la fonction Egalisation sont :

- la date et l'heure de lancement de la fonction générées par l'opérateur sol ,
- les coefficients des filtres égaliseurs (transmis au sol si la fonction Vérification Tarage doit être activée).

**Fonction Vérification Tarage**

A partir des paramètres de la fonction Param Tarage Egalisation et des résultats de la fonction Egalisation, la fonction Vérification Tarage, dont le but est la vérification du bon fonctionnement des fonctions Tarage/Egalisation et/ou la détection de pannes des chaînes de réception, met en oeuvre l'une des deux ou les deux opérations suivantes :

- Procédé n'utilisant pas les échantillons égalisés (paragraphe précédent A)
- Procédé utilisant les échantillons égalisés (parapgraphe précédent B)

Les sorties de la fonction Vérification Tarage sont :

- la date et l'heure de lancement de la fonction
- un rapport de bon ou mauvais fonctionnement des fonctions Tarage/Egalisation
- En cas de mauvais fonctionnement, le numéro de la voie défectueuse

**Revendications**

1. Dispositif de tarage et d'égalisation de chaînes de réception d'un système de traitement d'antennes comprenant plusieurs chaînes RF associées chacune à un élément rayonnant, un ensemble de capteurs formés Ci à partir des sorties des chaînes RF précédentes, des moyens d'injection d'un signal de tarage, des moyens de couplage du signal de tarage aux signaux capteurs, plusieurs chaînes de réception-numérisation **caractérisé en ce qu'**il comporte au moins :

   • un processeur adapté à gérer l'ensemble des dispositifs,
   • un moyen permettant d'ajuster la valeur du gain d'une chaîne RF à une valeur minimale Gmin,
   • un moyen de dépointage des capteurs adapté à minimiser leur directivité en direction des brouilleurs,
   • un moyen adapté à ajuster le niveau du signal de tarage ST injecté par rapport au signal des capteurs,
   • une chaîne RF ayant un gain réglé à une valeur minimale Gmin.

2. Dispositif selon la revendication 1 **caractérisé en ce que** les moyens d'injection du signal de tarage sont des coupleurs (20i).

3. Procédé de tarage et d'égalisation de chaînes de réception d'un système de traitement d'antennes comprenant plusieurs chaînes RF, une par élément rayonnant, plusieurs chaînes RF étant associées à un capteur formé Ci **caractérisé en ce qu'**il comporte au moins les étapes suivantes :

   - Injecter un signal de tarage $S_T(t)$ au niveau des signaux capteurs $S_C(t)$,
   - Régler la valeur du gain des chaînes RF (18ij) à une valeur minimale de gain Gmin,
   - Ajuster le signal de tarage $S_T(t)$ injecté en fonction du niveau du signal des capteurs,
   - Dépointer les capteurs Ci afin de minimiser leur directivité en direction des brouilleurs.

4. Procédé selon la revendication 3 **caractérisé en ce que** l'injection du signal se fait au moyen de coupleurs.

5. Procédé de tarage selon l'une des revendications 3 et 4 **caractérisé en ce que** pour chaque valeur de capteurs $n$ et pour chacune des $M$ positions fréquentielles $f_i$, $1 \leq i \leq M$, de la raie i dans la bande numérisée, on estime la quantité $Tn(f_i)$ ramenée en bande de base en calculant, au moyen d'une Transformée de Fourier Discrète (TFD) des $K$ échantillons $x_{ni}(k)$ acquis sur la voie $n$ pour la raie $i$, la réponse en fréquence $X_n(l_i)$ pour le canal discret $l_i$ associé à la raie $f_i$ :

$$X_n(l_i) \quad = \sum_{k=0}^{K-1} \ x_{ni}(k) \ \exp(-j2\pi k l_i/K) \qquad\qquad (10)$$

où $l_i$ est lié à $f_i$ par la relation suivante

Si $f_i < F_e/2$ : $l_i$ = Near[$K f_i/F_e$] + $K/2$     (modulo K)

Si $f_i \geq F_e/2$ : $l_i$ = Near[$K f_i/F_e$] - $K/2$     (modulo K)

où Near(x) correspond à l'entier le plus proche de x.

**6.** Procédé de tarage selon la revendication 5 **caractérisé en ce qu'**il détermine la voie de référence $X_1(l_i)$ et la valeur estimée, $h_n(l_i)$, de $h_n(f_i)$ ramenée en bande de base (entre [-$F_e$/2, $F_e$/2]), par $h_n(l_i) = X_1(l_i) / X_n(l_i)$.

**7.** Procédé de tarage et d'égalisation selon la revendication 6 **caractérisé en ce qu'**il comporte une étape où l'on impose la réponse en fréquence des filtres égaliseurs pour les points de mesure situés dans une petite bande de transition située à au moins une des deux extrémités de la bande numérisée, par interpolation linéaire sur les points de la bande de transition entre le dernier point de mesure de la bande numérisée de largeur Fe et le premier point de mesure de celle-ci.

**8.** Procédé selon la revendication 7 **caractérisé en ce qu'**il comporte une étape de synthèse de filtre à RIF de la manière suivante :

- On considère que la suite des $M$ échantillons fréquentiels, $\hat{h}_n(l_i)$ ($1 \leq i \leq M$), correspond aussi à la suite $\hat{h}_n(u_i + \delta) \triangleq h_{n,\delta}(u_i)$ ($1 \leq i \leq M$) où $u_i = l_i - \delta$ et où $\delta$ correspond à la valeur de $l_i$ la plus proche de zéro. Ainsi, zéro correspond à l'une des valeurs de $u_i$.
- On calcule la transformée de Fourier inverse, $\hat{h}_n(k)$ ($0 \leq k \leq M - 1$), des $M$ échantillons fréquentiels, $\hat{h}_n(u_i)$ ($1 \leq i \leq M$). Pour ce faire :

  - la suite $\hat{h}_n(l_i)$, correspondant à une représentation fréquentielle entre [-$F_e$/2, $F_e$/2] est périodisée de manière à obtenir une représentation entre [0, $F_e$]. On obtient la suite $h_n(l_i)'$
  - on construit la Transformée de Fourier inverse de la suite $h_n(l_i)'$, laquelle donne la suite d'échantillons temporels $h_n(k)$

- on construit la suite $\hat{h}_{n,\delta}(k) = \exp(-j2\pi\delta k/M) \hat{h}_n(k)$ ($0 \leq k \leq M - 1$), puis une version non causale de cette suite, en réordonnant ces coefficients. On construit alors la suite : [$h_{n,\delta}((M - 2)/2 + 1)$,....., $h_{n,\delta}((M - 1)$, $h_{n,\delta}(0)$, $h_{n,\delta}(1)$, ...., $h_{n,\delta}((M - 2)/2)$]
- on tronque la suite non causale précédente à $R$ valeurs, en éliminant les premières et dernières valeurs de la suite. On obtient alors, pour $R = 2q + 1$, une suite notée $H_{n,\delta} = [h_{n,\delta}(- q)$, ....., $h_{n,\delta}(-1)$, $h_{n,\delta}(0)$, $h_{n,\delta}(1)$, ...., $h_{n,\delta}(q)$], correspondant aux coefficients du filtre égaliseur de la voie $n$.

**9.** Procédé selon la revendication 8 **caractérisé en ce qu'**il comporte une étape où :

- On filtre les échantillons $x_{ni}(k)$ issus des voies de réception par les réponses impulsionnelles des filtres égaliseurs précédemment calculés,
- On retarde les échantillons $x_{1i}(k)$ de la voie de référence 1, non égalisée, de manière à compenser l'avance de phase de ces échantillons par rapport aux échantillons égalisés des autres voies, induite par l'opération de filtrage non causal des voies 2 à N.

**10.** Procédé de tarage et d'égalisation selon la revendication 3 **caractérisé en ce qu'**il comporte une étape de détection des pannes où chaque coefficient du filtre égaliseur est comparé à une valeur seuil.

**11.** Procédé de tarage et d'égalisation selon la revendication 3 **caractérisé en ce qu'**il comporte une étape de détection des pannes où :

A partir des échantillons $x_{nj}(k)$ ($0 \leq k \leq K - 1$) acquis en sortie de la chaîne de réception $n$ excitée par la raie $f_j$, on construit les sorties, $y_{nj}(k)$, du filtre égaliseur associé à la voie $n$ pour l'excitation considérée

$$y_{nj}(k) = \sum_{i=-q}^{+q} \hat{h}_{n,\delta}(i) \, x_{nj}(k-i+q) \quad (0 \leq k \leq K + 1 - R) \qquad (16)$$

avec q correspondant au nombre d'échantillons de la voie 1 retardés

on calcule l'erreur complexe moyenne associée à la voie $n$ et à la raie $j$ définie par

$$e_{nj} = 1/(K-R) \sum_{k=0}^{K+1-R} (y_{nj}(k) - y_{1j}(k)) \qquad (0 \leq k \leq K+1-R) \qquad (17)$$

si il existe au moins une position de raie $j$ telle que

$$E_{max} \leq |e_{nj}| \qquad \text{ou} \qquad \mathrm{E}_{max} \leq \mathrm{Arg}(e_{nj}) \qquad (18)$$

où $E_{max}$ et $\phi E_{max}$ sont des seuils décidés a priori, alors une panne est détectée.

**12.** Utilisation du dispositif selon l'une des revendications 1 ou 2 et du procédé selon l'une des revendications 3 à 11 pour le tarage et l'égalisation de capteurs embarqués sur Satellite.


**Patentansprüche**

**1.** Vorrichtung zum Kalibrieren und Entzerren von Empfangsketten eines Antennenverarbeitungssystems, das mehrere RF-Ketten, die je einem strahlenden Element zugeordnet sind, einen Satz von ausgehend von Ausgängen der vorhergehenden RF-Ketten geformten Sensoren Ci, Mittel zum Einspeisen eines Kalibriersignals, Mittel zur Kopplung des Kalibriersignals mit den Sensorsignalen, und mehrere Empfangs-Digitalisierungs-Ketten aufweist, **dadurch gekennzeichnet, dass** sie mindestens enthält:

- einen Prozessor, der in der Lage ist, die Gesamtheit der Vorrichtungen zu verwalten,
- ein Mittel, das es ermöglicht, den Wert der Verstärkung einer RF-Kette auf einen minimalen Wert Gmin einzustellen,
- ein Mittel zur Ausrichtungsversetzung der Sensoren, das ausgelegt ist, um ihre Richtwirkung in Richtung der Störsender zu minimieren,
- ein Mittel, das ausgelegt ist, um den Pegel des eingespeisten Kalibriersignals ST in Bezug auf das Signal der Sensoren einzustellen,
- eine RF-Kette, die eine auf einen minimalen Wert Gmin geregelte Verstärkung hat.

**2.** Vorrichtung nach Anspruch 1, **dadurch gekennzeichnet, dass** die Mittel zum Einspeisen des Kalibriersignals Koppler (20i) sind.

**3.** Verfahren zum Kalibrieren und Entzerren von Empfangsketten eines Antennenverarbeitungssystems, das mehrere RF-Ketten, eine für jedes strahlende Element, aufweist, wobei mehrere RF-Ketten einem geformten Sensor Ci zugeordnet sind, **dadurch gekennzeichnet, dass** es mindestens die folgenden Schritte aufweist:

- Einspeisen eines Kalibriersignals $S_\tau(t)$ in Höhe der Sensorsignale $S_c(t)$,
- Regeln des Werts der Verstärkung der RF-Ketten (18ij) auf einen minimalen Verstärkungswert Gmin,
- Einstellen des eingespeisten Kalibriersignals Sτ(t) in Abhängigkeit vom Pegel des Signals der Sensoren,
- Versetzen der Ausrichtung der Sensoren Ci, um ihre Richtwirkung in Richtung der Störsender zu minimieren.

**4.** Verfahren nach Anspruch 3, **dadurch gekennzeichnet, dass** die Einspeisung des Signals mit Hilfe von Kopplern erfolgt.

**5.** Kalibrierungsverfahren nach einem der Ansprüche 3 und 4, **dadurch gekennzeichnet, dass** für jeden Sensorenwert n und für jede der M Frequenzpositionen $f_i$, $1 \leq i \leq M$, der Linie i im digitalisierten Band die in das Basisband rückgeführte Menge $T_n(f_i)$ geschätzt wird, indem mittels einer diskreten Fouriertransformierten (TFD) der auf dem Kanal n für die Linie i erfassten K Tastproben $x_{ni}(k)$ die Frequenzantwort $X_n(l_i)$ für den der Linie $f_i$ zugeordneten diskreten Kanal $l_i$ berechnet wird:

$$X_n(l_i) = \sum_{k=0}^{K-1} x_{ni}(k)\exp(-j2\pi k l_i / K) \qquad (10)$$

wobei $l_i$ mit $f_i$ durch die folgende Beziehung verbunden ist:

wenn $f_i < F_e/2$ : $l_i$ = Near[$Kf_i/F_e$]+K/2     (modulo K)

wenn $f_i \geq F_e/2$ : $l_i$ = Near[$Kf_i/F_e$]-K/2     (modulo K)

wobei Near(x) der x am nächsten liegenden ganzen Zahl entspricht.

6. Kalibrierungsverfahren nach Anspruch 5, **dadurch gekennzeichnet, dass** es den Bezugskanal $X_1(l_i)$ und den geschätzten Wert $h_n(l_i)$ von $h_n(f_i)$, rückgeführt in das Basisband (zwischen [-$F_e$/2, $F_e$/2]), durch $h_n(l_i) = X_1(l_i)/X_n(l_i)$ bestimmt.

7. Kalibrierungs- und Entzerrungsverfahren nach Anspruch 6, **dadurch gekennzeichnet, dass** es einen Schritt aufweist, in dem die Frequenzantwort der Entzerrerfilter für die Messpunkte, die sich in einem kleinen Übergangsband befinden, das sich an mindestens einem der beiden Enden des digitalisierten Bands befindet, durch lineare Interpolation auf die Punkte des Übergangsbands zwischen dem letzten Messpunkt des digitalisierten Bands der Breite $F_e$ und dem ersten Messpunkt dieses Bands aufgezwungen wird.

8. Verfahren nach Anspruch 7, **dadurch gekennzeichnet, dass** es einen Schritt der Filtersynthese mit endlicher Impulsantwort (RIF) in folgender Weise aufweist:

- es wird angenommen, dass die Folge der M Frequenztastproben $\hat{h}_n(l_i)(1 \leq i \leq M)$ auch der Folge $\hat{h}_n(u_i+\delta) \underline{\Delta}$ $h_{n,\delta}(u_i)$ ($1 \leq i \leq M$) entspricht, wobei $u_i = l_i - \delta$, und wobei $\delta$ dem Null am nächsten liegenden Wert von $l_i$ entspricht; so entspricht Null einem der Werte von $u_i$
- es wird die inverse Fouriertransformierte $h_n(k)(0 \leq k \leq M-1)$ der M Frequenztastproben $\hat{h}_n(u_i)$ ($1 \leq i \leq M$) berechnet; hierzu:

    - wird die Folge $\hat{h}_n(l_i)$, die einer Frequenzdarstellung zwischen [-$F_e$/2, $F_e$/2] entspricht, so periodisiert, dass eine Darstellung zwischen [O, $F_e$] erhalten wird; man erhält die Folge $h_n(l_i)'$

    - wird die inverse Fouriertransformierte der Folge $h_n(l_i)'$ konstruiert, die die Folge von zeitlichen Tastproben $h_n(k)$ ergibt

- es wird die Folge $\hat{h}_{n,\delta}(k)$ =exp (-j2$\pi\delta$k/M) $\hat{h}_n(k)(0 \leq k \leq M-1)$, und dann eine nicht kausale Version dieser Folge konstruiert, indem diese Koeffizienten neu geordnet werden; dann wird die Folge [$h_{n,\delta}$((M-2) /2+1), ..., $h_{n,\delta}$((M-1), $h_{n,\delta}$(0), $h_{n,\delta}$(1), ..., $h_{n,\delta}$((M-2)/2)] konstruiert
- die vorhergehende nicht kausale Folge wird auf R Werte beschnitten, indem die ersten und letzten Werte der Folge entfernt werden; man erhält dann für R=2q+1 eine mit $H_{n,\delta}$=[$h_{n,\delta}$(-q), ..., $h_{n,\delta}$(-1), $h_{n,\delta}$(0) $h_{n,\delta}$(1) ..., $h_{n,\delta}$ (q)] bezeichnete Folge, die den Koeffizienten des Entzerrerfilters des Kanals n entspricht.

9. Verfahren nach Anspruch 8, **dadurch gekennzeichnet, dass** es einen Schritt aufweist, in dem:

- die von den Empfangskanälen kommenden Tastproben $x_{ni}(k)$ durch die Impulsantworten der vorher berechneten Entzerrerfilter gefiltert werden,
- die Tastproben $x_{1i}(k)$ des nicht entzerrten Bezugskanals 1 verzögert werden, um den Phasenvorlauf dieser Tastproben bezüglich der entzerrten Tastproben der anderen Kanäle, der durch den Vorgang des nicht kausalen Filterns der Kanäle 2 bis N induziert wird, zu kompensieren.

10. Kalibrierungs- und Entzerrungsverfahren nach Anspruch 3, **dadurch gekennzeichnet, dass** es einen Schritt des Erfassens der Störfälle aufweist, in dem jeder Koeffizient des Entzerrerfilters mit einem Schwellwert verglichen wird.

11. Kalibrierungs- und Entzerrungsverfahren nach Anspruch 3, **dadurch gekennzeichnet, dass** es einen Schritt des Erfassens der Störfälle aufweist, in dem:

ausgehend von den Tastproben $x_{nj}(k)(0 \leq k \leq K-1)$, die am Ausgang der von der Linie $f_j$ erregten Empfangskette n erhalten werden, die Ausgänge $y_{nj}(k)$ des dem Kanal n zugeordneten Entzerrerfilters für die betrachtete Erregung konstruiert werden

$$y_{nj}(k) = \sum_{i=-q}^{+q} \hat{h}_{n,\delta}(i)x_{nj}(k - i + q)(0 \leq k \leq K + 1 - R) \quad (16)$$

wobei q der Anzahl von verzögerten Tastproben des Kanals 1 entspricht
der komplexe mittlere Fehler berechnet wird, der dem Kanal n und der Linie j zugeordnet ist, und der definiert ist durch

$$e_{nj} = 1/(K - R)\sum_{k=0}^{K+1-R}\left(y_{nj}(k) - y_{1j}(k)\right)(0 \leq k \leq K + 1 - R)$$

$$(17)$$

wenn es mindestens eine Linienposition j gibt, die so ist, dass

$$E_{max} \leq |e_{nj}| \text{ oder } \phi E_{max} \leq \text{Arg}(e_{nj}) \quad (18)$$

wobei $E_{max}$ und $\phi E_{max}$ a priori entschiedene Schwellwerte sind, dann wird ein Störfall erfasst.

**12.** Verwendung der Vorrichtung nach einem der Ansprüche 1 und 2 und des Verfahrens nach einem der Ansprüche 3 bis 11 zum Kalibrieren und Entzerren von Sensoren an Bord eines Satelliten.


**Claims**

**1.** Device for the calibration and equalization of reception chains of a system for processing antennas comprising several RF chains each associated with a radiating element, a set of sensors formed Ci on the basis of the outputs of the previous RF chains, means of injection of a calibration signal, means of coupling of the calibration signal to the sensor signals, several reception-digitization chains, **characterized in that** it comprises at least:

- one processor adapted to managing the whole set of devices,
- a means making it possible to adjust the value of the gain of an RF chain to a minimum value Gmin,
- a means of pointing error the aim of the sensors, adapted to minimizing their directivity towards jammers,
- a means adapted to adjusting the level of the calibration signal ST injected with respect to the signal of the sensors,
- an RF chain having a gain set to a minimum value Gmin.

**2.** Device according to Claim 1, **characterized in that** the means of injection of the calibration signal are, couplers (20i).

**3.** Method of calibration and equalization of reception chains of a system for processing antennas comprising several RF chains, one per radiating element, several RF chains being associated with a sensor formed Ci, **characterized in that** it comprises at least the following steps:

- injecting a calibration signal $S_T(t)$ at the level of the sensor signals $S_C(t)$,
- setting the value of the gain of the RF chains (18ij) to a minimum gain value Gmin,
- adjusting the calibration signal $S_T(t)$ injected according to a function of the level of the signal of the sensors,
- pointing error the aim of the sensors Ci so as to minimize their directivity towards jammers.

**4.** Method according to Claim 3, **characterized in that** the injection of the signal is done by means of couplers.

**5.** Method of calibration according to either of Claims 3 and 4, **characterized in that**, for each value of sensors *n* and for each of the *M* frequency positions $f_i$, $1 \leq i \leq M$, of the line i in the digitized band, the quantity $T_n(f_i)$ reduced to baseband is estimated by calculating, by means of a discrete Fourier Transform (DFT) $K$ samples $x_{ni}(k)$ acquired on the pathway n for the line $i$, the frequency response $X_n(l_i)$ for the discrete channel $l_i$ associated with line $f_i$:

$$X_n(l_i) \quad = \sum_{k=0}^{K-1} x_{ni}(k) \; \exp(-j2\pi kl_i/K) \qquad\qquad (10)$$

where $l_i$ is related to $f_i$ by the following relationship
 If $f_i < F_e/2$ : $l_i$ = Near[$Kf_i/F_e$] + $K$/2 (modulo K)
 If $f_i \geq Fe/2$ : $l_i$ = Near[$Kf_i/F_e$] - $K$/2 (modulo)
where Near(x) corresponds to the nearest integer to x.

**6.** Method of calibration according to Claim 5, **characterized in that** it determines the reference pathway $X_1(l_i)$ and the estimated value, $h_n(l_i)$, of $h_n(f_i)$ reduced to baseband (between [-$F_e$/2, $F_e$/2]), by $h_n(l_i) = X_1(l_i)/X_n(l_i)$,

**7.** Method of calibration and equalization according to Claim 6, **characterized in that** it comprises a step in which the frequency response of the equalizer filters is imposed for the measurement points situated in a small transition band situated at least one of the two ends of the digitized band, by linear interpolation on the points of the transition band between the last measurement point of the digitized band of width Fe and the first measurement point of the latter.

**8.** Method according to Claim 7, **characterized in that** it comprises a step of FIR filter synthesis as follows :

- we consider that the series of M frequency samples, $\hat{h}_n(l_i)$ $(1 \leq i \leq M)$ also corresponds to the series $\hat{h}_n(u_i+\delta)$ $\underline{\Delta}\, h_{n,\delta}(u_i)$ $(1 \leq i \leq M)$ where $u_i = l_i - \delta$ and where $\delta$ corresponds to the value of $l_i$ nearest to zero. Thus zero corresponds to one of the values of $u_i$,
- we calculate the inverse Fourier transform, $\hat{h}_n(k)$ $(0 \leq k \leq M - 1)$, of the $M$ frequency samples, $\hat{h}_n(u_i)$ $(1 \leq i \leq M)$. To do this :

  - the series $\hat{h}_n(l_i)$, corresponding to a frequency representation between [-$F_e$ /2, $F_e$ /2] is periodized so as to obtain a representation between [0, $F_e$]. We obtain the series $h_n(l_i)'$
  - we construct the inverse Fourier Transform of the series $h_n(l_i)'$ which gives the series of time samples $\hat{h}_n(k)$

- we construct the series $h_{n,\delta}(k)=\exp(-j2\pi\delta k/M))\hat{h}_n(k)$ $(0 \leq k \leq M - 1)$, then a non-casual version of this series, by reordering these coefficients. We then construct the series : [$h_{n,\delta}$ ((M - 2)/2 + 1),...., $h_{n,\delta}$((M - 1), $h_{n,\delta}$ (0), $h_{n,\delta}$ (1),...., $h_{n,\delta}$ ((M-2)/2] is built,
- we truncate the previous non-causal series to $R$ values, by eliminating the first and last values of the series. We then obtain, for $R$ = 2q + 1, a series denoted $H_{n,\delta}$ = [$h_{n,\delta}$(-q),...., $h_{n,\delta}$ (-1), $h_{n,\delta}$ (0), $h_{n,\delta}$ (1),...., $h_{n,\delta}$ (q)], corresponding to the coefficients of the equalizing filter of the pathway $n$.

**9.** Method according to Claim 8, **characterized in that** it comprises a step in which :

- we filter the samples $x_{ni}(k)$ emanating from the reception pathways by the impulse responses of the equalizer filters previously calculated,
- we delay the samples $x_{1i}(k)$ of reference pathway 1, not equalized, so as to compensate for the phase advance of these samples with respect to the equalized samples of the other pathways, which advance is induced by the non-causal filtering operation of pathways 2 to N.

**10.** Method of calibration and equalization according to Claim 3, **characterized in that** it comprises a step of detecting the faults where each coefficient of the equalizer filter is compared with a threshold value.

**11.** Method of calibration and equalization according to Claim 3, **characterized in that** it comprises a step of detecting faults where : on the basis of the samples $x_{nj}(k)$ $(0 \leq k \leq K - 1)$ acquired at the output of the reception chain $n$ excited by line $f_j$, we construct the outputs, $y_{nj}(k)$ of the equalizing filter associated with pathway n for the excitation considered

$$y_{nj}(k) \quad = \quad \sum_{i=-q}^{+q} \quad \hat{h}_{n,\delta}(i) \; x_{nj}(k-i+q) \quad (0 \le k \le K+1-R) \qquad (16)$$

with q corresponding to the number of delayed samples of pathway 1;
we calculate the mean complex error associated with pathway $n$ and with line $j$ defined by

$$e_{nj} \quad = \quad 1/\,(K-R) \sum_{k=0}^{K+1-R} (y_{nj}(k) - y_{1j}(k)) \qquad (0 \le k \le K+1-R) \quad (17)$$

if there exists at least one position of line $j$ such that :

$$E_{max} \le |e_{nj}| \; or \; \phi E_{max} \le \mathrm{Arg}(e_{nj}) \qquad (18)$$

where $E_{max}$ and $\phi E_{max}$ are thresholds decided *a priori,* then a fault is detected.

12. Use of the device according to either Claims 1 and 2 and of the method according to one of Claims 3 to 11 for the calibration and equalization of satellite-borne sensors.

$C_1$      $C_Q$   *Capteurs élémentaires*

$X(t)$

| *Chaînes RF* **2** | G |

| *Formation des Sous-réseaux* **3** | W |

1 . . . N

| *Chaînes Numérisations* **4** | Γ |

| *Traitement Bord* **5b** | *Traitement sol* **5s** |

# FIG.1

**Chaines de réception-numérisation**

Voie 1    $T_1(f)$

| ANA | CAN | $x_1(k)$ **Voie référence** y

Voie k

| ANA | CAN | $x_k(k)$ y   $H_k(z)$   $z_k(k)$

$T_k(f)$      $k^{ème}$ **filtre égalisation**

# FIG.2

20

**Chaines de réception-numérisation**

Capteurs

11

T1(f)

Voie 1

Voie référence

$X_1(k)$

ANA | CAN

Signal de tarage

Voie k

Traitement

Tarage

13

ANA | CAN

$X_k(k)$

Tk(f)

12

Système injection

$S_r(t)$

Tarage 10

Gabarits corrections en fréquence

# FIG.3

$R$ positions successives de la raie

fréquences

$Fe$

# FIG.4

$17_1$

Chaînes

$15_1$

$C_1$

$17_2$

Chaînes

$15_2$

$C_2$

$17_3$

Chaînes

$15_3$

$C_3$

$17_4$

Chaînes

$15_4$

$C_4$

Capteurs ou
sous-BFNs

Commutateur

Signal de
Tarage 16

**FIG.5**

Signaux
capteurs $S_c(t)$

$18_{11}$  $19_{11}$

RF

RF

RF

$C_1$

$18_{13}$  w

$A_1$

$20_1$

$21_1$

ANA   CAN

$A_2$

$20_2$

$21_2$

ANA   CAN

$A_3$

$20_3$

$21_3$

ANA   CAN

Traitement
23

$C_4$

$18_{41}$

RF

RF

RF

w

Capteurs

$A_4$

$20_4$

$21_4$

ANA   CAN

$S_T(t)$  16

Coupleurs
20i

Chaînes
Réception-
Numérisation 21i

Processeur
sol

**FIG.6**

FIG.7

Erreurs mesurées en fréquence avant tarage

FIG.8

**Bord**

Tarage

Initialisation Tarage

Egalisation

Param. Tarage
Egalisation

Param. Initialisation
Tarage

Vérification Tarage

Optimisation Gain
et Niveau

Pilotage Tarage

**Sol**

FIG.9

**FIG.10**

**FIG.11**